# EUROPÄISCHE PATENTSCHRIFT

(11) **EP 1 674 046 B1**
(45) Veröffentlichungstag und Bekanntmachung des Hinweises auf die Patenterteilung: **23.02.2011**
(21) Anmeldenummer: 04030422.2
(22) Anmeldetag: 22.12.2004
(51) Int. Cl.: A61C 1/05, A61B 17/16

(54) **Kühlmittel - Verteilerstück für medizinische Handstücke**
Coolant distribution part for medical handpieces
Pièce de distribution de liquide de refroidissement pour pièces à main médicales

(43) Veröffentlichungstag der Anmeldung: 28.06.2006
(73) Patentinhaber: W & H Dentalwerk Bürmoos GmbH, 5111 Bürmoos (AT)
(72) Erfinder: Putzhammer, Franz, 5201 Seekirchen a.W. (AT); Meingassner, Wolfgang, 5122 Überackern (AT)

(56) Entgegenhaltungen:
- DE-C- 856 794
- DE-U- 6 940 204
- DE-U1- 9 303 058
- US-A- 3 199 196
- US-A- 5 147 203

## Beschreibung

Die vorliegende Erfindung betrifft ein Kühlmittel - Verteilerstück für medizinische Handstücke gemäß dem Oberbegriff des Anspruchs 1.

Das Verteilerstück dient insbesondere bei chirurgischen und implantologischen Anwendungen der Verteilung eines Kühlmittels, bevorzugt Wasser oder einer physiologischen Kochsalzlösung, an eine Außenkühlung bzw. an eine Bohrerinnenkühlung. Bei der Außenkühlung wird das Kühlmittel entlang der Außenhülse des Handstücks in einer Leitung bis zum Handstückkopf und damit in die Nähe des im Handstückkopf aufgenommenen Werkzeugs geführt. Die Abgabe des Kühlmittels erfolgt auf das Werkzeug und auf die unmittelbar um das Werkzeug befindliche Präparationsstelle. Bei der Bohrerinnenkühlung ragt die ebenfalls entlang der Außenhülse des Handstücks geführte Kühlmittelleitung durch eine Öffnung in der Außenhülse bis in das Innere des Handstückkopfs. Das distale Ende der Kühlmittelleitung ist in der Innenbohrung des im Handstückkopf eingespannten Werkzeugs aufgenommen, so dass das Kühlmittel durch das Werkzeug fließt und am distalen Ende des Werkzeugs abgegeben wird.

Ein derartiges Verteilerstück ist aus dem Gebrauchsmuster DE 93 03 058 U1 bekannt: Auf der Klammer, mit der das Verteilerstück am Handstück befestigt ist, ist eine Y-förmige Weiche angeordnet, die das Kühlmittel von einer Anschlussleitung, die an die Kühlmittelquelle angeschlossen ist, auf zwei Schläuche für die Bohrerinnen- und die Außenkühlung aufteilt. Jeder der beiden Schläuche ist an seinem distalen Ende mit einem Kühlrohr verbunden, die das Kühlmittel in die Innenbohrung des Werkzeugs bzw. zum Werkzeug leiten.

Dieses Verteilerstück hat mehrere Nachteile: So besteht bei dem Verteilerstück der DE '058 keine Möglichkeit nur eine der beiden Kühlungen einzusetzen.

Weiters kann es nur mit Handstücken eingesetzt werden, die an der Außenhülse des Handstückkopfs eine Haltevorrichtung für das Innenkühlrohr und insbesondere das an der Außenhülse des Handstückkopfs unlösbar befestigte (angelötete) Außenkühlrohr haben. Wird das Handstück für eine Anwendung eingesetzt, bei der keine Kühlmittelzufuhr notwendig ist, so kann zwar das Verteilerstück vom Handstück getrennt werden, es verbleiben jedoch die an der Außenhülse des Handstückkopfs angeordnete Haltevorrichtung für das Innenkühlrohr und das an der Außenhülse des Handstückkopfs unlösbar befestigte Außenkühlrohr am Handstück. Beide Bauteile sind für den Anwender während der Behandlung eine Sichtbehinderung und insbesondere das Außenkühlrohr beschränkt auch die Bewegungsfreiheit des Anwenders und erhöht die Verletzungsgefahr für den Patienten.

Da die Kühlrohre einen sehr geringen Durchmesser haben, kommt es häufig zu einer Verstopfung der Kühlrohre, z.B. durch Kalkablagerungen, so dass es des Öfteren notwendig ist, die Kühlrohre auszutauschen. Dies bedeutet im Fall des an der Außenhülse des Handstückkopfs angelöteten Außenkühlrohrs, dass auch die intakte und funktionsfähige Außenhülse entsorgt werden muss, was den Austausch des Außenrohrs kompliziert und die Kosten erhöht.

Ein weiterer Nachteil besteht darin, dass durch die Anordnung des Verteilerstücks im Griffbereich des Handstücks und der beiden von dort bis zum Handstückkopf verlaufenden Schläuche und Rohre das Festhalten und die Handhabung des Handstücks erschwert werden.

Aus dem Stand der Technik ist des Weiteren die Patentschrift US 5,147,203 bekannt, die eine pistolenförmige Aushärtelampe mit zwei Kühlmittelleitungen offenbart, die durch zwei Befestigungsvorrichtungen an der Aushärtelampe befestigt sind. Die erste, rückwärtige Befestigungsvorrichtung ist durch einen das Gehäuse der Aushärtelampe umgreifenden, gezähnten Ring gebildet, der von den beiden Kühlmittelleitungen durchsetzt wird. Die zweite Befestigungsvorrichtung umfasst eine Manschette, die die Kühlmittelleitungen am Vorderende des Lichtleiters fixiert.

Die Patentschrift DE 856.794 beschreibt eine Spüleinrichtung für ein Handstück bestehend aus einer Flüssigkeitsleitung zur Abgabe von Flüssigkeit aus einem geschlossenen Flüssigkeitsbehälter auf die Präparationsstelle und einer Schaltvorrichtung zur wahlweisen Abgabe der Flüssigkeit. Die Schaltvorrichtung umfasst eine Leitung, die mit einer Druckluftquelle verbunden ist, und die in eine Kammer mit einem Schlitz am Handstück mündet. Strömt die Druckluft durch die Druckluftleitung, die Kammer und den Schlitz in die Umgebung, so wird keine Flüssigkeit gefördert und die Spülvorrichtung gibt keine Flüssigkeit ab. Deckt der Anwender mit seinem Finger den Schlitz der Kammer derart ab, dass die Druckluft nicht in die Umgebung entweichen kann, so strömt sie in den Flüssigkeitsbehälter, aus dem sie ebenfalls nicht entweichen kann, so dass im Flüssigkeitsbehälter ein Überdruck aufgebaut wird, durch den die Flüssigkeit aus dem Behälter gedrückt und durch die Flüssigkeitsleitung zur Präparationsstelle gefördert wird.

Ein anderer Nachteil dieser aus dem Stand der Technik bekannten Kühlmittel - Verteilerstücke besteht darin, dass aufgrund der Verschiebbarkeit der Rohrleitungen eine zielgenaue Abgabe des Kühlmediums auf das Werkzeug und die Präparationsstelle nicht gewährleistet ist.

Der vorliegenden Erfindung liegt daher die Aufgabe zugrunde ein Kühlmittel - Verteilerstück für medizinische Handstücke unter Vermeidung der oben angeführten Nachteile auszugestalten.

Diese Aufgabe wird gemäß der vorliegenden Erfindung durch ein Kühlmittel - Verteilerstück für medizinische Handstücke mit den Merkmalen des Anspruchs 1 gelöst. Besonders vorteilhafte Ausführungsformen sind in den Unteransprüchen angeführt.

Das erfindungsgemäße Kühlmittel - Verteilerstück umfasst zwei getrennte Anschlussvorrichtungen, eine erste Anschlussvorrichtung zum Anschluss der Kühlmittelleitung für die Bohrerinnenkühlung und einer zweiten Anschlussvorrichtung zum Anschluss der Kühlmittelleitung für die Außenkühlung, wobei zumindest eine der beiden Anschlussrichtungen eine Rohrleitung umfasst, die unlösbar mit dem Verteilerstück verbunden ist. Durch die Trennung der beiden Anschlussvorrichtungen ist es möglich, wahlweise eine oder beide Kühlungen zu verwenden.

In einem ersten Ausführungsbeispiel ist eine Anschlussvorrichtung als Befestigungsvorrichtung, bevorzugt als lösbare Klemm-, Rast- oder Steckvorrichtung, zur Aufnahme der jeweiligen Kühlmittelleitung ausgebildet. Bevorzugt sind die beiden Anschlussvorrichtungen parallel zueinander ausgerichtet. Wird nur eine der beiden Kühlungen verwendet, so kann die in der lösbaren Klemm-, Rast- oder Steckvorrichtung aufgenommene Kühlmittel- oder Rohrleitung der nicht verwendeten Kühlung einfach vom Verteilerstück getrennt werden, wodurch die Handhabung des Handstücks für den Anwender erleichtert wird.

In einem zweiten Ausführungsbeispiel sind beide Anschlussvorrichtungen durch eine Rohrleitung, die unlösbar mit dem Verteilerstück verbunden ist, gebildet. Bevorzugt ist die Rohrleitung einstückig mit dem Verteilerstück geformt, wodurch sicher gestellt ist, dass die Rohrleitung sich auch während der Behandlung nicht verschiebt.

In einem weiteren Ausführungsbeispiel ist der Durchmesser der Befestigungsvorrichtung, mit der das Verteilerstück lösbar am Handstück fixiert wird, an den Durchmesser der Griffhülse im Bereich des kopfnahen Abschnitts angepasst. Dadurch ist sichergestellt, dass das Kühlmittel-Verteilerstück nur im Bereich des kopfnahen Abschnitts auf das Handstück aufgesteckt werden kann. In vorteilhafter Weise behindert das Kühlmittel-Verteilerstück damit nicht das Ergreifen und Festhalten des Handstücks durch den Anwender während der Behandlung.

Das Verteilerstück wird aus Kunststoff, durch ein Spritzgussverfahren, hergestellt.

Die Erfindung sowie weitere sich daraus ergebende Vorteile werden nachfolgend anhand bevorzugter Ausführungsbeispiele und Bezug nehmend auf die beigefügten Zeichnungen erläutert:
Figur 1 zeigt ein Ausführungsbeispiel eines nicht erfindungsgemäßen Kühlmittel - Verteilerstücks.
Figur 2 zeigt in Seitenansicht eine Anschlussvorrichtung eines erfindungsgemäßen Kühlmittel - Verteilerstücks.
Figur 3 zeigt ein medizinisches Handstück mit einem erfindungsgemäßen Kühlmittel - Verteilerstück.

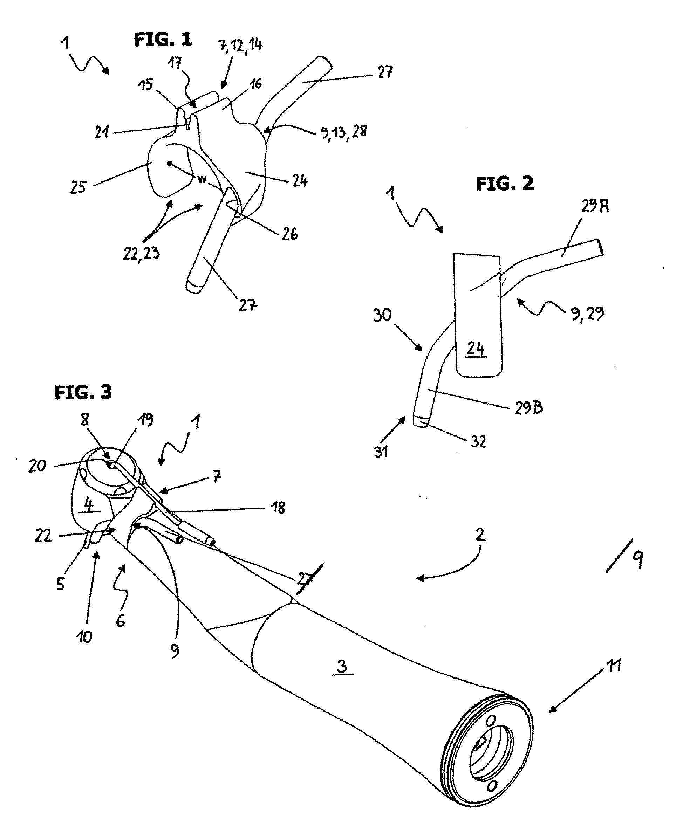

Figur 3 zeigt ein erfindungsgemäßes Kühlmittel-Verteilerstück 1, das auf einem Handstück 2 aufgesteckt ist. Bei dem Handstück 2 handelt es sich um ein gewinkeltes Handstück (Winkelstück) mit einer Griffhülse 3, an deren proximalen Ende sich eine Kupplungsvorrichtung 11 zum Anschluss an ein Anschlussstück, zum Beispiel an einen Antriebsmotor oder an eine Kupplung für einen Versorgungsschlauch, befindet. An das distale Ende der Griffhülse 3 schließt der Handstückkopf 4 an, in dem eine Werkzeugaufnahme für ein Behandlungswerkzeug 5 angeordnet ist, die durch Verbindung des Handstücks 2 mit einer Energiequelle in eine Antriebsbewegung versetzt werden.

Das Kühlmittel-Verteilerstück 1 ist auf dem kopfnahen Abschnitt 6 der Griffhülse 3 mittels einer lösbaren Befestigungsvorrichtung 22 befestigt. Wie insbesondere in Figur 1 zu erkennen ist, besteht Befestigungsvorrichtung 22 aus einer Klammer 23 mit zwei federnden Armen 24, 25. Ist das Kühlmittel-Verteilerstück 1 auf dem Handstück 2 befestigt, so umfassen die beiden Arme 24, 25 den Außenumfang der Griffhülse 3 zu etwa zwei Dritteln. Bevorzugt ist die lichte Weite W zwischen den beiden Armen 24, 25 an den Durchmesser der Griffhülse 3 im Bereich des kopfnahen Abschnitts 6 angepasst (der kopfnahe Abschnitt 6 ist der Bereich mit dem geringsten Durchmesser der sich zum Handstückkopf 4 verjüngenden Griffhülse 3). Dadurch ist sichergestellt, dass das Kühlmittel-Verteilerstück 1 nur im Bereich des kopfnahen Abschnitts 6, bevorzugt in direktem Anschluss an den Handstückkopf 4, auf das Handstück 2 aufgesteckt werden kann und dort auch während des Betriebs des Handstücks 2 verbleibt. In vorteilhafter Weise behindert das Kühlmittel-Verteilerstück 1 damit nicht das Ergreifen und Festhalten des Handstücks 2 durch den Anwender während der Behandlung.

Das Kühlmittel-Verteilerstück 1 umfasst eine erste Anschlussvorrichtung 7 für die Bohrerinnenkühlung 8 und eine zweite Anschlussvorrichtung 9 für die Außenkühlung 10. In dem ersten nicht erfindungsgemäßen Ausführungsbeispiel gemäß Figur 1 sind beide Anschlussvorrichtungen 7, 9 durch Befestigungsvorrichtungen 12, 13 gebildet. Befestigungsvorrichtung 12 ist als Klemmvorrichtung 14 mit zwei Klemmleisten 15, 16 ausgeführt. Zwischen den beiden Klemmleisten 15, 16 verläuft eine Führungsrinne 17 zur lösbaren Aufnahme einer Kühlmittelleitung 18. Die Kühlmittelleitung 18 kann ein Rohr oder ein Schlauch sein und ist direkt oder über Zwischenstücke mit der Flüssigkeitsquelle verbunden. Am distalen Ende weist die Kühlmittelleitung 18 eine Biegung 19 auf, die durch eine Öffnung 20 in das Innere des Handstückkopfs 4 führt. Der an die Biegung 19 anschließende Kühlmittelleitungsabschnitt reicht bis in die Innenbohrung des Werkzeuges 5.

Die Klemmleisten 15, 16 der Klemmvorrichtung 14 sind bevorzugt schwach federnd ausgebildet, so dass sie beim Einsetzen der Kühlmittelleitung 18 etwas nach außen (von der Führungsrinne 17 wegweisend) ausweichen und die Kühlmittelleitung 18 ausreichend fest fixieren. Um die Federwirkung der Klemmleisten 15, 16 zu erhöhen, ist unterhalb der Führungsrinne 17 eine schmale Nut 21 vorgesehen.

Befestigungsvorrichtung 13 ist als Steckvorrichtung 28 in Form einer Bohrung 26 im Verteilerstück 1, bevorzugt in einem der Arme 24, 25, ausgeführt. In dieser Bohrung 26 ist eine Kühlmittelleitung 27 durch Einstecken bzw. Einschieben aufgenommen. Die Kühlmittelleitung 27 kann wiederum ein Rohr oder ein Schlauch sein und ist direkt oder über Zwischenstücke mit der Flüssigkeitsquelle verbunden.

In Figur 2 ist in einer seitlichen Teilansicht Arm 24 des erfindungsgemäßen Kühlmittel-Verteilerstücks 1 dargestellt. Die Anschlussvorrichtung 9 ist hier durch eine Rohrleitung 29 gebildet, die unlösbar mit dem Verteilerstück 1 verbunden ist. Bevorzugt ist die Rohrleitung 29 einstückig als Teil des Verteilerstücks 1 geformt. Durch diese Ausführung ist sichergestellt, dass die Rohrleitung 29 sich auch während der Behandlung nicht verschiebt, womit eine zielgenaue Abgabe des Kühlmediums auf das Werkzeug 5 und die Präparationsstelle gewährleistet ist.

Rohrleitung 29 besteht aus einem proximalen Abschnitt 29 A und einem distalen Abschnitt 29 B, wobei insbesondere der distale Abschnitt 29 B eine Biegung 30 aufweist, um das Kühlmittel im wesentlichen auf die Werkzeugspitze des Werkzeugs 5 zu lenken. Für eine exakte Abgabe des Kühlmittels ist das Vorderende 31 des distalen Abschnitts 29 B als Düse 32 ausgebildet.

Die Erfindung ist nicht auf das dargestellte Anwendungsgebiet und das beschriebene Ausführungsbeispiel beschränkt, sondern umfaßt alle Ausführungsmöglichkeiten, die das prinzipielle, sinngemäße Funktionsprinzip der Erfindung nicht verändern. Insbesondere können sowohl Anschlussvorrichtung 7 als auch Anschlussvorrichtung 9 als Befestigungsvorrichtung oder als Rohrleitung ausgebildet sein.

## Patentansprüche

1. Kühlmittel - Verteilerstück (1) für medizinische Handstücke (2) zur Weiterleitung eines Kühlmittels für die Bohrerinnenkühlung (8) und für die Außenkühlung (10) mit einer lösbaren Befestigungsvorrichtung (22) zum Befestigen des Verteilerstücks (1) am Handstück (2), mit einer ersten Anschlussvorrichtung (7) zum Anschluss einer Kühlmittelleitung (18) für die Bohrerinnenkühlung (8) und mit einer zweiten Anschlussvorrichtung (9) zum Anschluss einer Kühlmittelleitung (27) für die Außenkühlung, **dadurch gekennzeichnet, dass**
zumindest eine der beiden Anschlussvorrichtungen (7, 9) eine Rohrleitung (29) umfasst, die unlösbar mit dem Verteilerstück (1) verbunden ist und dass das Verteilerstück (1) aus Kunststoff und durch ein Spritzgussverfahren hergestellt ist.

2. Kühlmittel - Verteilerstück (1) nach Anspruch 1, **dadurch gekennzeichnet, dass**
die andere der beiden Anschlussvorrichtungen (7, 9) durch eine Befestigungsvorrichtung (12, 13) gebildet ist, die eine lösbare Klemm- (14), Rast- oder Steckvorrichtung (28) zur Aufnahme einer Kühlmittelleitung (18, 27) umfasst.

3. Kühlmittel - Verteiterstück (1) nach Anspruch 2, **dadurch gekennzeichnet, dass**
die Befestigungsvorrichtung (12, 13) eine Klemmvorrichtung (14) mit zwei federnden Klemmleisten (15, 16) umfasst, zwischen denen die Kühlmittelleitung (18) einsetzbar ist.

4. Kühlmittel - Verteilerstück (1) nach Anspruch 2, **dadurch gekennzeichnet, dass**
die Befestigungsvorrichtung (12, 13) eine Steckvorrichtung (28) umfasst, die durch eine Bohrung (26) im Verteilerstück (1) gebildet ist, in der eine Kühlmittelleitung (27) aufnehmbar ist.

5. Kühlmittel - Verteilerstück (1) nach einem der vorhergehenden Ansprüche, **dadurch gekennzeichnet, dass**
die Rohrleitung (29) einstückig mit dem Verteilerstück (1) geformt ist.

6. Kühlmittel - Verteilerstück (1) nach einem der vorhergehenden Ansprüche, **dadurch gekennzeichnet, dass**
die Rohrleitung (29) einen distalen Abschnitt (29 B) und einen proximalen Abschnitt (29A) umfasst, wobei der distale Abschnitt (29 B) eine Biegung (30) aufweist, um das Kühlmittel im Wesentlichen auf die Werkzeugspitze des Werkzeugs (5) zu lenken.

7. Kühlmittel - Verteiterstück (1) nach einem der vorhergehenden Ansprüche, **gekennzeichnet durch**
eine Düse (32) am Vorderende (31) der Rohrleitung (29).

8. Kühlmittel - Verteilerstück (1) nach einem der vorhergehenden Ansprüche, **dadurch gekennzeichnet, dass**
die lösbare Befestigungsvorrichtung (22) zum Befestigen des Verteilerstücks (1) am Handstück (2) eine Klammer (23) mit federnden Armen (24, 25) umfasst.

9. Kühlmittel - Verteilerstück (1) nach Anspruch 8, **dadurch gekennzeichnet, dass**
die lichte Weite (W) zwischen den Armen (24, 25) der Klammer (23) so gewählt ist, dass sie in etwa dem Durchmesser des handstückkopfnahen Abschnitts (6) der Griffhülse (3) entspricht, so dass die Klammer (23) nur im handstückkopfnahen Abschnitt (6) der Griffhülse (3) befestigbar ist.

10. Kühlmittel - Verteilerstück (1) nach einem der vorhergehenden Ansprüche, **dadurch gekennzeichnet, dass**
die lösbare Befestigungsvorrichtung (22) einen Arm (24, 25) aufweist, der von einer Anschlussvorrichtung (7, 9) durchsetzt ist.

11. Kühlmittel - Verteilerstück (1) nach einem der vorhergehenden Ansprüche, **dadurch gekennzeichnet, dass**
die beiden Anschlussvorrichtungen (7, 9) schräg zueinander angeordnet sind.

12. Winkelstück (2) umfassend eine Griffhülse (3) und einen daran anschließenden Kopf (4), **gekennzeichnet durch**
ein Kühlmittel - Verteilerstück (1) nach einem der vorhergehenden Ansprüche.

13. Winkelstück (2) nach Anspruch 12, **dadurch gekennzeichnet, dass**
das Kühlmittel-Verteilerstück (1) im Bereich des kopfnahen Abschnitts (6) der Griffhülse (3) vorgesehen ist.

14. Winkelstück (2) nach Anspruch 12 oder 13, **dadurch gekennzeichnet, dass**
am Kopf (4) eine Öffnung (20) vorgesehen ist, durch die eine Kühlmittelleitung (18) des Kühlmittel - Verteilerstücks (1) bis in eine Innenbohrung eines mit dem Winkelstück (2) verbundenen Werkzeugs (5) reicht.

## Claims

1. A coolant distributor piece (1) for medical handpieces (2) for feeding a coolant for drill inner cooling (8) and for external cooling (10) having a detachable fastening device (22) for fastening the distributor piece (1) on the handpiece (2), having a first connecting device (7) for connecting a coolant line (18) for the drill inner cooling (8) and having a second connecting device (9) for connecting a coolant line (27) for the external cooling, **characterized in that**
at least one of the two connecting devices (7, 9) comprises a pipeline (29), which is permanently connected to the distributor piece (1), and **in that** the distributor piece (1) is manufactured from plastic by an injection molding process.

2. The coolant distributor piece (1) according to Claim 1, **characterized in that**
the other of the two connecting devices (7, 9) is formed by a fastening device (12, 13), comprising a detachable clamping device (14), catch device or plug device (28) for receiving a coolant line (18, 27).

3. The coolant distributor piece (1) according to Claim 2, **characterized in that**
the fastening device (12, 13) comprises a clamping device (14) having two spring-loaded clamp strips (15, 16) between which the coolant line (18) can be inserted.

4. The coolant distributor piece (1) according to Claim 2, **characterized in that**
the fastening device (12, 13) comprises a plug device (28) which is formed by a bore (26) in the distributor piece (1) in which a coolant line (27) can be held.

5. The coolant distributor piece (1) according to any one of the preceding claims, **characterized in that**
the pipeline (29) is shaped in one piece with the distributor piece (1).

6. The coolant distributor piece (1) according to any one of the preceding claims, **characterized in that**
the pipeline (29) has a distal section (29 B) and a proximal section (29A), the distal section (29 B) having a bend (30) to deflect the coolant essentially to the tool tip of the tool (5).

7. The coolant distributor piece (1) according to any one of the preceding claims, **characterized by**
a nozzle (32) on the front end (31) of the pipeline (29).

8. The coolant distributor piece (1) according to any one of the preceding claims, **characterized in that**
the detachable fastening device (22) for fastening the distributor piece (1) on the handpiece (2) comprises a clamp (23) having spring-loaded arms (24, 25).

9. The coolant distributor piece (1) according to Claim 8, **characterized in that**
the inside clearance (W) between the arms (24, 25) of the clamp (23) is selected so that it corresponds approximately to the diameter of the section (6) of the grip sleeve (3) near the head of the handpiece, so that the clamp (23) can be attached only in the section (6) of the grip sleeve (3) near the head of the handpiece.

10. The coolant distributor piece (1) according to any one of the preceding claims, **characterized in that**
the detachable fastening device (22) has an arm (24, 25) through which a connecting device (7, 9) passes.

11. The coolant distributor piece (1) according to any one of the preceding claims, **characterized in that**
the two connecting devices (7, 9) are arranged obliquely to one another.

12. A contra-angled handpiece (2) comprising a grip sleeve (3) and a head (4) connected thereto, **characterized by**
a coolant distributor piece (1) according to any one of the preceding claims.

13. The contra-angled handpiece (2) according to Claim 12, **characterized in that**
the coolant distributor piece (1) is provided in the area of the section (6) of the grip sleeve (3) near the head.

14. The contra-angled handpiece (2) according to Claim 12 or 13, **characterized in that**
an opening (20) is provided on the head (4) through which a coolant line (18) of the coolant distributor piece (1) extends into an inner bore of a tool (5) connected to the contra-angled handpiece (2).

## Revendications

1. Pièce distributrice de réfrigérant (1) pour des pièces à main médicales (2) pour transférer un réfrigérant pour le refroidissement intérieur du foret (8) et le refroidissement extérieur (10), comprenant un dispositif de fixation séparable (22) pour fixer la pièce distributrice (1) sur la pièce à main (2), comprenant un premier dispositif de raccordement (7) pour raccorder une ligne de réfrigérant (18) pour le refroidissement intérieur du foret (8) et comprenant un deuxième dispositif de raccordement (9) pour raccorder une ligne de réfrigérant (27) pour le refroidissement extérieur, **caractérisée en ce**
**qu'**au moins un des deux dispositifs de raccordement (7, 9) comprend un tubage (29) qui est relié de manière non séparable à la pièce distributrice (1) et en ce que la pièce distributrice (1) est en plastique et est fabriquée par un procédé de moulage par injection.

2. Pièce distributrice de réfrigérant (1) selon la revendication 1, **caractérisée en ce que**
l'autre des deux dispositifs de raccordement (7, 9) est formé par un dispositif de fixation (12, 13) qui comprend un dispositif de serrage (14), un dispositif d'enclenchement ou d'insertion (28) séparables pour recevoir une ligne de réfrigérant (18, 27).

3. Pièce distributrice de réfrigérant (1) selon la revendication 2, **caractérisée en ce que**
le dispositif de fixation (12, 13) comprend un dispositif de serrage (14) avec deux baguettes de serrage élastiques (15, 16) entre lesquelles la conduite de réfrigérant (18) peut être insérée.

4. Pièce distributrice de réfrigérant (1) selon la revendication 2, **caractérisée en ce que**
le dispositif de serrage (12, 13) comprend un dispositif d'insertion (28) formé par un alésage (26) dans la pièce distributrice (1) dans lequel une ligne de réfrigérant (27) peut être reçue.

5. Pièce distributrice de réfrigérant (1) selon l'une des revendications précédentes, **caractérisée en ce que**
le tubage (29) est formé de manière monobloc avec la pièce distributrice (1).

6. Pièce distributrice de réfrigérant (1) selon l'une des revendications précédentes, **caractérisée en ce que**
le tubage (29) comprend un segment distal (29B) et un segment proximal (29A), sachant que le segment distal (29B) comprend une courbure (30) pour diriger le réfrigérant essentiellement sur la pointe de l'outil (5).

7. Pièce distributrice de réfrigérant (1) selon l'une des revendications précédentes, **caractérisée en ce**
**qu'**une buse (32) est prévue sur l'extrémité avant (31) du tubage (29).

8. Pièce distributrice de réfrigérant (1) selon l'une des revendications précédentes, **caractérisée en ce que**
le dispositif de fixation séparable (22) pour fixer la pièce distributrice (1) sur la pièce à main (2) comprend une pince (23) avec des bras élastiques (24, 25).

9. Pièce distributrice de réfrigérant (1) selon la revendication 8, **caractérisée en ce que**
l'écartement (W) entre les bras (24, 25) de la pince (23) est ainsi choisi qu'il correspond environ au diamètre du segment proche de la tête de la pièce à main (6) de la douille de manche (3) de façon à ce que la pince (23) ne puisse être fixée que dans le segment proche de la tête de la pièce à main(6) de la douille de manche (3).

10. Pièce distributrice de réfrigérant (1) selon l'une des revendications précédentes, **caractérisée en ce que**
le dispositif de fixation séparable (22) présente un bras (24, 25) qui contient un dispositif de raccordement (7, 9).

11. Pièce distributrice de réfrigérant (1) selon l'une des revendications précédentes, **caractérisée en ce que**
les deux dispositifs de raccordement (7, 9) sont disposés en biais l'un par rapport à l'autre.

12. Raccord angulaire (2) comprenant une douille de manche (3) et une tête se raccordant dessus (4), **caractérisé par**
une pièce distributrice de réfrigérant (1) selon l'une des revendications précédentes.

13. Raccord angulaire (2) selon la revendication 12, **caractérisé en ce que**
la pièce distributrice de réfrigérant (1) est prévue au niveau du segment proche de la tête (6) de la douille de manche (3).

14. Raccord angulaire (2) selon la revendication 12 ou 13, **caractérisé en ce qu'**une ouverture (20) est prévue sur la tête (4), à travers laquelle une ligne de réfrigérant (18) de la pièce distributrice de réfrigérant (1) va jusque dans un alésage intérieur d'un outil (5) relié au raccord angulaire (2).
